# EUROPEAN PATENT SPECIFICATION

(11) **EP 2 433 412 B1**
(45) Date of publication and mention of the grant of the patent: **08.05.2019**
(21) Application number: 10723854.5
(22) Date of filing: 17.05.2010
(51) Int. Cl.: H04L 29/08

(54) **LIMITING STORAGE MESSAGES IN PEER TO PEER NETWORK**
EINSCHRÄNKUNG VON SPEICHERNACHRICHTEN IN EINEM PEER-TO-PEER-NETZWERK
LIMITATION DE MESSAGES DE STOCKAGE DANS UN RÉSEAU PAIR-A-PAIR

(30) Priority: 18.05.2009 US 467849
(43) Date of publication of application: 28.03.2012
(73) Proprietor: Cisco Technology, Inc., San Jose, CA 95134-1706 (US)
(72) Inventor: BHARDWAJ, Manish, San Jose, California 95110 (US); TIAN, Jining, Cupertino, California 95014 (US)
(74) Representative: Kazi, Ilya
(86) International application number: PCT/US2010/035131
(87) International publication number: WO 2010/135254

(56) References cited:
- EP-A1- 2 034 665
- WO-A1-2008/110054
- DE-B3-102006 021 591
- US-A1- 2008 177 873
- JUWEI SHI ET AL: "A Hierarchical Peer-to-Peer SIP System for Heterogeneous Overlays Interworking" GLOBAL TELECOMMUNICATIONS CONFERENCE, 2007. GLOBECOM '07. IEEE, IEEE, PISCATAWAY, NJ, USA, 1 November 2007 (2007-11-01), pages 93-97, XP031195953 ISBN: 978-1-4244-1042-2

## Description

### FIELD OF THE INVENTION

The present application relates generally to peer-to-peer networks and more particularly to limiting broadcast flooding of storage messages.

### BACKGROUND OF THE INVENTION

A peer-to-peer network is an example of a network (of a limited number of peer devices) that is overlaid on another network, in this case, the Internet. In such networks it is often the case that a piece of content or a service desired by one of the peers can be provided by more than one other node in the overlay network.

An example peer to peer network may include a network based on distributed hash tables (DHTs). DHTs are a class of decentralized distributed systems that provide a lookup service similar to a hash table: (name, value) pairs are stored in the DHT, and any participating node can efficiently retrieve the value associated with a given name. Responsibility for maintaining the mapping from names to values is distributed among the nodes, in such a way that a change in the set of participants causes a minimal amount of disruption. This advantageously allows DHTs to scale to extremely large numbers of nodes and to handle continual node arrivals, departures, and failures. DHTs form an infrastructure that can be used to build more complex services, such as distributed file systems, peer to peer file sharing and content distribution systems, cooperative web caching, multicast, anycast, domain name services, and instant messaging.

A paper by Juwei Shi et al entitled "A Hierarchical Peer-to-Peer SIP System for Heterogeneous Overlays Interworking" published in Global Telecommunications Conference, 2007. GLOBECOM '07. IEEE, pages 93-97, proposes leveraging Peer-to-Peer computing to control multimedia sessions in a decentralized manner. EP 2 034 665 discloses a domain manager system comprising multiple domain managers therein and a register query center. The register query center is used for storing a neighbor relationship judging information of the multiple domain managers, receiving a query request from a first domain manager and querying the neighbor domain manager in the neighbor relationship judging information based on the query request, sending the query result to the first domain manager. The first domain manager then acquires the domain manager which approximates with the first domain manager from the received query result. WO 2008/110054 discloses a communication method for nodes among peer-to-peer overlay networks, wherein a peer-to-peer network system comprises a plurality of local overlay networks, each local overlay network containing a plurality of proxy nodes, peer-to-peer network system further comprising a global overlay network, which comprises all of the proxy nodes of the local overlay networks, the proxy nodes being used to response a request from a request node, query the local overlay networks or the global overlay network, and return to the request node the address information of the requested node or the address information of the selected proxy node at the requested side. US 2008/177873 discloses a method for designing file replication schemes in file sharing systems considering node storage constraints and node up/down statistics, file storage costs, and file transfer costs among the nodes, user request rates for the files, and user specified file availability requirements. The file replication scheme for a peer-to-peer file sharing system in a distributed and adaptive manner can scale to a large number of nodes and files and can handle changes in the user request pattern over time.

### BRIEF DESCRIPTION OF THE DRAWINGS

The details of the present disclosure, both as to its structure and operation, can best be understood in reference to the accompanying drawings, in which like reference numerals refer to like parts, and in which:
Figure 1 is a block diagram of an example system in accordance with present principles;
Figure 2 is a block diagram of a part of the system shown in Figure 1;
Figure 3 is a flow chart of example logic for PUTs; and
Figure 4 is a flow chart of example logic for GETs.

### DESCRIPTION OF EXAMPLE EMBODIMENTS

### OVERVIEW

As understood herein, peering among DHTs (e.g., peering among service providers implementing DHTs, as opposed to peering among individual clients within a single service provider's domain) can be achieved by broadcasting Put and Get messages (respectively, messages seeking to place data and messages seeking to obtain data) among the peered DHTs. If all DHTs are directly connected to all other DHTs then broadcasting is straightforward, but as understood herein, if the relationship between peering DHTs is more topologically complex so that some DHTs do not connect directly to other DHTs (as is the case with peering among multiple service providers), then flooding Put and Get messages is potentially expensive. Indeed, as further understood herein the requirement to replicate records in all other DHT rings greatly increases the number of records, placed by the broadcast PUT, in each DHT ring, which adversely impacts database lookup latency. Also, a broadcast GET message results in a lookup in every DHT ring, which increases messaging overhead. With these recognitions in mind, the description below is provided.

The invention is defined by the methods, apparatus and computer readable medium according to the appended claims.

### EXAMPLE EMBODIMENTS

The following acronyms and definitions are used herein:
Autonomous DHT (AD): a DHT operated independently of other DHTs, with the nodes in the AD serving the entire DHT ID keyspace.

Peering Gateway: a designated node in a DHT which has Internet Protocol (IP) connectivity to one or more Peering Gateways in other ADs and which forwards Puts, Gets, and the responses to Gets between the local DHT and the peer(s).

Origin or Home DHT: The DHT in which a piece of content is originally stored, which is the authoritative source for the content.

Present principles apply to one or more usage scenarios. For example, in one scenario multiple Autonomous Systems are provided within a single provider. More specifically, for operational reasons, a single service provider may choose to operate a network as a set of autonomous systems (AS). Each AS may be run by a different organization. These AS do not necessarily have to be true AS in the routing sense. For example, an AS may be an "Autonomous DHT" (AD). An Autonomous DHT is a group of nodes that form their own independent DHT ring and operate largely independently of other ADs. Each AD has access to the complete DHT ID space, but may or may not store content that is stored in other ADs. It is desirable in this case that content located in one AD can be selectively accessed from another. There are many variants of this scenario, such as a provider having one AD that hosts the provider's content and a number of ADs that serve different regions or different classes of customer (such as mobile, DSL, etc).

Another usage scenario is peering among providers, in which service providers who operate DHTs may wish to peer with each other. This scenario differs from the preceding case mainly in the fact that a high degree of co operation or trust among competing providers cannot be assumed. Thus, this scenario requires an appropriate level of isolation and policy control between providers. Variants of this scenario include providers whose main function is to host content, who then peer with providers whose main function is to connect customers to the content. Other variants may include providers who provide connectivity between small providers and "backbone" providers. In both of the above usage scenarios the graph of providers should not be assumed to have any particular structure.

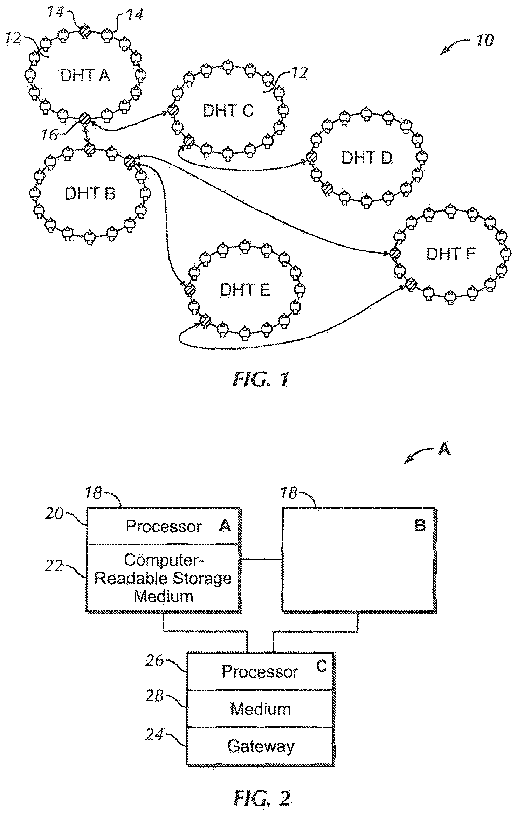

Accordingly and turning now to Figure 1, a system 10 of networks 12 is organized into a hierarchy that may be expected to develop among peering content providers. A strict hierarchy with only a single root among the networks 12 and with every network being the child of at most one parent network should not be assumed because such an assumption is too restrictive as a practical matter. Each network 12 may establish a distributed hash table (DHT).

As shown, each network 12 can be composed of respective plural DHT storage nodes 14 as shown. Each DHT storage node 14 may be a DHT per se or may be another DHT-like entity that supports the Put/Get interface of a DHT even though it may be implemented in some other way internally. In one example embodiment each network can serve puts and gets of any key in the full DHT keyspace.

Each network 12 includes a respective gateway node 16, discussed further below, that communicates with one or more gateway nodes of other networks 12. Thus, not all storage nodes 14 communicate with the other networks; rather, only the gateway nodes 16 of the various networks 12 communicate with other networks. Typically, a gateway 16 executes the logic below, although nodes 14 in a network 12 may execute all or part of the logic on behalf of network if desired.

In the example embodiment shown in Figure 1, the networks 12 are labeled with the letters "A"-"F", and Figure 1 illustrates that a strict top-down hierarchy among networks 12 may not be implemented. Instead, as shown network "A" communicates directly with networks "B" and "C" and with no other networks, whereas network "B" communicates directly with networks "A", "E", and "F". Networks "E" and "F" communicate with each other directly. Network "C", in addition to communicating with network "A" directly as described above, communicates directly with only one other network, namely, network "D", which communicates directly with no other network.

Thus, it may now be appreciated that peering among DHTs may be selective, just as peering among Internet service providers is selective. Thus, the graph of peering relationships among DHTs is arbitrary and not a full mesh, in that not every DHT communicates directly with every other DHT in the system 10, although all DHTs in the system may communicate with each other indirectly through other DHTs.

Figure 2 shows a simplified view of a network, in this case, the network A from Figure 1. As shown, a network may include plural members 18 (such as one of the above-described DHT storage nodes 14), each typically with one or more processors 20 accessing one or more computer-readable storage media 22 such as but not limited to solid state storage and disk storage. Typically, a network also includes at least one respective gateway 24 (such as the above-described gateway node 16) with its own processor 26 and computer readable storage media 28 that may embody present logic for execution thereof by the processor 26. Other parts of the logic may be implemented by one or more other members of the network. Network member 18 may include, without limitation, end user client devices, Internet servers, routers, switches, etc.

As an initial matter, data is stored in a DHT by performing a PUT (key, value) operation; the value is stored at a location, typically in one and only one DHT storage node, that is indicated by the fixed length key field of the PUT message. Data is retrieved using a GET (key) operation, which returns the value stored at the location indicated by the key field in the GET message. In a bit more detail, content is indexed by hashing an extensible resource identifier (xri) of the content to generate a key. The value of the key is a descriptor that contains locations where the content is stored (resources). The content can then be located by hashing this xri and performing a GET on the generated key to retrieve the descriptor and then downloading the content from the resources listed in the descriptor. In example embodiments a single, flat keyspace is common to all DHTs, and all DHTs can PUT and GET values indexed by keys in that keyspace.

Present principles recognize that the extensible resource identifier (xri) typically contains not just the name of the content but also additional information, including the identification of the content provider. As also recognized herein, the number of content providers is typically much smaller than the number of pieces of content, and it is likely that content providers and DHT operators (service providers) would enter into agreements for content publishing, meaning that a particular content provider would publish content in only a subset of DHT rings and moreover a subset that does not frequently change.

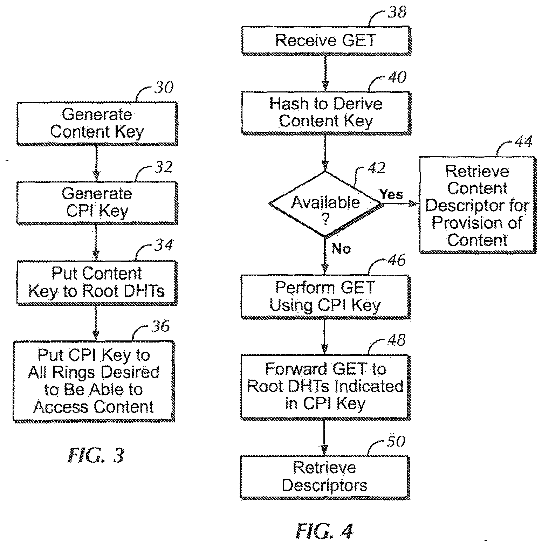

Accordingly and now turning to Figure 3 content is published in an overlay network such as the one described above using not a broadcast PUT but rather a multicast PUT as follows. At block 30, the content provider/service provider hashes the xri of the content to generate a content key. Thus, for example, content "a" created by content provider "b" has an xri of the form xri://a.b, and the xri is hashed to generate a content key = hash(xri://a.b). The content key indicates an actual storage location of the content location descriptor.

At block 32, the content provider string embedded in the xri is hashed to generate a secondary key, referred to herein as the "content provider id" ("CPI") key = hash(xri://b) . The CPI key indexes a content provider descriptor which indicates a subset of storage nodes (e.g., DHT rings) in the overlay network at which content from the respective content provider might be stored. Stated differently, the CPI key indexes a descriptor with links pointing to DHTs where a content provider (in the above example, content provider "b") has placed or expects to place content. These links may be the well-known peering nodes of these DHTs, similar to Border Gateways in BGP, or they may be ring identifications. In some embodiments the descriptor established by the CPI key may be different for different DHTs. For example, if DHT "C" has a special peering relationship with DHT "B", then the descriptor (CPI key) published in DHT "C" may only contain the link to DHT "B", thus facilitating complex peering relationships to exist on a per-content provider basis.

Moving to block 34, the first key (the content key) is PUT to at least one "root" DHT. The number of "root" DHTs is less than the total number of DHTs in the overlay network, and so the PUT at block 34 is not a broadcast PUT but rather only a multicast PUT. In essence, the first (content) key is PUT to root DHTs of the DHT rings that the particular service provider publishes in, and only to those root DHTs.

On the other hand, at block 36 the second key (the CPI key) is PUT to all DHT rings for which the content provider desires the content to be available. As understood herein, while the PUT at block 36 appears to be a broadcast PUT, the set of DHT rings that the content provider publishes in is unlikely to change frequently and thus this PUT operation is only necessary when the content provider wishes to add/delete a DHT ring from its list of searchable rings.

Thus, the descriptor represented by the CPI key establishes a policy mechanism for the content provider to control access to its content. The number of content-providers is expected to be far smaller than the number of content pieces and thus the number of content-provider descriptors is expected to incur small storage overhead.

Furthermore, while a multicast PUT of the content key is required to a content provider's "root" DHTs each time the content provider publishes a new piece of content or moves a piece of content, the PUT of the CPI key is not required until such time as the "root" DHTs of that content provider changes, i.e., until such time as the list of rings in which that content provider publishes content changes

Figure 4 illustrates how content may be retrieved in the overlay network described above using a multicast GET. At block 38, a node in a DHT handling a request for content hashes, at block 40, the full published xri of the content and performs a GET on the generated content key. If decision diamond 42 indicates that the content is available in the DHT, the descriptor for the content is retrieved at block 44. Otherwise (i.e., the GET fails at decision diamond 42), the logic flows to block 46 to perform a GET on the CPI key (derived in accordance with above principles), accordingly retrieving the list of DHTs where the content from that provider might be available. At block 48 the GET of the content key is forwarded via multicast to the "root" DHTs discovered at block 46. At block 50 one or more content location descriptors are retrieved indicating resources from which to download the content, with the descriptor(s) returned to the node originating the GET.

Thus, what is retrieved from the root DHTs is not the key but the descriptor which is indexed by the key, which, recall, is generated by hashing the xri of the content. The xri is made available to the requesting Service Node when the content is advertised via a portal.

In the event of stale CPI descriptors or a policy where peering DHTs do not supply content to a particular DHT, it may be possible for the GETs in Figure 4 to fail. If this occurs, the node can resort to a broadcast GET to all other peering DHTs as a final attempt to find the content.

In some example implementations, as a further enhancement, based on policy, the node retrieving the content then publishes the descriptor for the content in its local DHT with itself as the resource, allowing further requests from the same DHT to find the content locally and avoid the multicast GET. The lifetime/refresh rate of this generated descriptor can depend on policy, enforced by the descriptor for the content-provider. For example, if the content-provider specifies "single-use" then this local descriptor will not be generated.

If desired, the node need not add its DHT as a possible "root" for the content provider, since the content provider would have done this already by adding it to the list of DHTs in the content-provider descriptor. This eliminates the need to republish the CPI descriptor in all DHTs as content is delivered from one DHT to another.

In some embodiments, the structure/content of the CPI key may be established to establish peering relationships, preference orders, usage limits and other policy details. For example, the CPI key can be used not only to establish the list of root nodes but also a preference as to the order in which the DHTs represented by the key are accessed, e.g., by ordering the root nodes from most preferred to least preferred.

While the particular LIMITING STORAGE MESSAGES IN PEERTO PEER NETWORK is herein shown and described in detail, it is to be understood that the subject matter which is encompassed by the present disclosure is limited only by the claims.

## Claims

1. A method comprising:
responding, at a storage node in an overlay distributed hash table, DHT, network in a system of DHT networks, the networks in the system not being fully meshed with each other, to storage of a piece of content provided by a particular content provider by:
generating (30) a content key used to identify a storage location of the piece of content by hashing an extensible resource identifier, xri, of the piece of content; and
generating (32) a content provider identifier, CPI, key associated with the particular content provider by hashing a content provider string in the xri, the CPI key indicating a subset of DHT networks in the system of DHT networks at which the piece of content provided by the particular content provider might be stored;
sending (34) the content key only to respective root nodes of the subset of DHT networks using a multicast PUT; and
publishing (36) the CPI key using a PUT only to desired DHT networks in the system of DHT networks apart from the subset of DHT networks the desired DHT networks being defined by the particular content provider.

2. A method according to any preceding Claim, wherein the content key is published to the desired DHT networks only when the subset of DHT networks changes.

3. A method according to Claim 1, wherein the xri is of the form xri://a.b associated with the content, wherein "a" identifies the content and "b" identifies the content provider, and generating the CPI key includes hashing an xri of the form xri://b associated with the content provider.

4. A method at a storage node in an overlay distributed hash table, DHT, network in a system of DHT networks, the method comprising:
receiving (38) at the storage node in the overlay DHT network, from a requestor, a request for a piece of content;
generating a content key used to identify a storage location of the piece of content by hashing an extensible resource identifier, xri, of the piece of content;
performing a GET on the content key;
if the piece of content is available at the storage node, retrieving (44) the content key for the piece of content and sending the content key to the requestor;
if the piece of content is not available at the storage node, generating a content provider identifier, CPI, key associated with the particular content provider by hashing a content provider string in the xri, the CPI key indicating a subset of DHT networks in the system of DHT networks at which the piece of content provided by the particular content provider might be stored;
performing (46) a GET on the CPI key to obtain identifications of the subset DHT networks; and
forwarding (48) a GET of the content key to nodes associated with the identifications of the subset of DHT networks.

5. A method according to Claim 4, further comprising:
retrieving from at least one storage node in the subset of DHT networks a respective content location descriptor indicating a respective resource from which to download the content; and
returning the content location descriptor or descriptors to the requestor.

6. A method according to Claim 4, wherein if the GETs fail the method further comprises generating a broadcast GET to all other peering nodes to find the content key.

7. A method according to Claim 5, wherein, after retrieving the content, the storage node publishes the content location description for the piece of content locally indicating itself as the resource, thereby allowing further requests from the same requestor to find the content locally.

8. Apparatus comprising a processor configured to perform all steps of a method according to any one of the preceding claims.

9. A computer readable medium including executable instructions which, when executed by a processor, cause the processor to perform all steps of a method according to any one of claims 1 to 7.

## Patentansprüche

1. Verfahren, das Folgendes umfasst:
Antworten, an einem Speicherknoten in einem überlagerten verteilten Hash-Tabellen- (Distributed Hash Table, DHT) Netzwerk in einem System von DHT-Netzwerken, wobei die Netzwerke in dem System nicht vollständig miteinander verzahnt sind, auf die Speicherung eines Inhaltselements, der von einem bestimmten Inhaltsanbieter bereitgestellt wird, durch:
Erzeugen (30) eines Inhaltsschlüssels, der verwendet wird, um einen Speicherort des Inhaltselements zu identifizieren, durch Hashing einer erweiterbaren Ressourcenkennung xri des Inhaltselements; und
Erzeugen (32) einer Inhaltsanbieterkennung (Content Provider Identifier, CPI) eines Schlüssels, der dem bestimmten Inhaltsanbieter zugeordnet ist, durch Hashing einer Inhaltsanbieter-Zeichenfolge in der Xri, wobei der CPI-Schlüssel eine Teilmenge von DHT-Netzwerken im System von DHT-Netzwerken angibt, in denen der von dem bestimmten Inhaltsanbieter bereitgestellte Inhalt gespeichert werden kann;
Senden (34) des Inhaltsschlüssels nur an jeweilige Wurzelknoten der Teilmenge von DHT-Netzwerken unter Verwendung einer Multicast-PUT; und
Veröffentlichen (36) des CPI-Schlüssels unter Verwendung einer PUT nur in gewünschten DHT-Netzwerken in dem System von DHT-Netzwerken, abgesehen von der Teilmenge von DHT-Netzwerken, wobei die gewünschten DHT-Netzwerke vom jeweiligen Inhaltsanbieter definiert werden.

2. Verfahren nach einem der vorhergehenden Ansprüche, wobei der Inhaltsschlüssel nur dann in den gewünschten DHT-Netzwerken veröffentlicht wird, wenn sich die Teilmenge der DHT-Netzwerke ändert.

3. Verfahren nach Anspruch 1, wobei das xri die Form xri://a.b hat, die dem Inhalt zugeordnet ist, wobei "a" den Inhalt und "b" den Inhaltsanbieter angibt und das Generieren des CPI-Schlüssels das Hashing eines Xri der Form xri://b umfasst, die dem Inhaltsanbieter zugeordnet ist.

4. Verfahren an einem Speicherknoten in einem überlagerten verteilten Hashtabellen-DHT-Netzwerk in einem System von DHT-Netzwerken, wobei das Verfahren Folgendes umfasst:
Empfangen (38) einer Anforderung nach einem Inhaltselement an dem Speicherknoten in dem überlagerten DHT-Netzwerk von einem Anforderer;
Erzeugen eines Inhaltsschlüssels, der verwendet wird, um einen Speicherort des Inhaltselements zu identifizieren, durch Hashing einer erweiterbaren Ressourcenkennung xri des Inhaltselements;
Durchführen eines GET für den Inhaltsschlüssel;
wenn das Inhaltselement am Speicherknoten verfügbar ist, Abrufen (44) des Inhaltsschlüssels für das Inhaltselement und Senden des Inhaltsschlüssels an den Anforderer;
wenn der Inhalt nicht auf dem Speicherknoten verfügbar ist, Generieren einer Inhaltsanbieterkennung, CPI, eines Schlüssels, der dem bestimmten Inhaltsanbieter zugeordnet ist, durch Hashing einer Inhaltsanbieter-Zeichenfolge in der Xri, wobei der CPI-Schlüssel eine Teilmenge von DHT-Netzwerken im System von DHT-Netzwerken angibt, in denen der von dem bestimmten Inhaltsanbieter bereitgestellte Inhalt gespeichert werden kann;
Durchführen (46) eines GET mit dem CPI-Schlüssel, um Identifizierungen der Teilmenge von DHT-Netzwerken zu erhalten; und
Weiterleiten (48) eines GET des Inhaltsschlüssels an Knoten, die den Identifizierungen der Teilmenge von DHT-Netzwerken zugeordnet sind.

5. Verfahren nach Anspruch 4, das ferner Folgendes umfasst:
Abrufen eines jeweiligen Inhaltsortsdeskriptors von mindestens einem Speicherknoten in der Teilmenge von DHT-Netzwerken, der eine jeweilige Ressource angibt, von der der Inhalt heruntergeladen werden kann; und
Zurücksenden des Inhaltsortsdeskriptors oder - deskriptoren an den Anforderer.

6. Verfahren nach Anspruch 4, wobei, wenn die GETs fehlschlagen, das Verfahren des Weiteren das Generieren eines Rundsende-GET an alle anderen Peering-Knoten umfasst, um den Inhaltsschlüssel zu finden.

7. Verfahren nach Anspruch 5, wobei der Speicherknoten nach dem Abrufen des Inhalts die Inhaltsstandortbeschreibung für das Inhaltelement veröffentlicht, das sich lokal als Ressource angibt, wodurch weitere Anfragen des gleichen Anforderers erlaubt werden, um den Inhalt lokal zu finden.

8. Vorrichtung, die einen Prozessor umfasst, der dafür konfiguriert ist, alle Schritte eines Verfahrens nach einem der vorhergehenden Ansprüche auszuführen.

9. Computerlesbares Medium, das ausführbare Anweisungen enthält, die, wenn sie von einem Prozessor ausgeführt werden, den Prozessor dazu veranlassen, alle Schritte eines Verfahrens nach einem der Ansprüche 1 bis 7 auszuführen.

## Revendications

1. Procédé consistant à :
répondre, au niveau d'un noeud de stockage dans un réseau superposé à table de hachage distribuée (DHT) dans un système de réseaux DHT, les réseaux du système n'étant pas entièrement maillés les uns avec les autres, pour stocker un élément de contenu fournir par un fournisseur de contenu particulier, en réalisant les étapes consistant à :
générer (30) une clé de contenu utilisée pour identifier un emplacement de stockage de l'élément de contenu en hachant un identifiant de ressource extensible (xri) de l'élément de contenu ; et
générer (32) une clé d'identifiant de fournisseur de contenu (CPI) associée au fournisseur de contenu particulier en hachant une chaîne de fournisseur de contenu dans le xri, la clé CPI indiquant, dans le système de réseaux DHT, un sous-ensemble de réseaux DHT au niveau duquel l'élément de contenu fourni par le fournisseur de contenu particulier pourrait être stocké ;
envoyer (34) la clé de contenu uniquement aux noeuds racines respectifs du sous-ensemble de réseaux DHT au moyen d'un message multicast PUT ; et
publier (36) la clé CPI au moyen d'un message PUT uniquement vers des réseaux DHT souhaités dans le système de réseaux DHT hormis le sous-ensemble de réseaux DHT, les réseaux DHT souhaités étant définis par le fournisseur de contenu particulier.

2. Procédé selon la revendication précédente, dans lequel la clé de contenu est publiée vers les réseaux DHT souhaités uniquement quand le sous-ensemble de réseaux DHT varie.

3. Procédé selon la revendication 1, dans lequel le xri se présente sous la forme xri://a.b associée au contenu, où « a » identifie le contenu et « b » identifie le fournisseur de contenu, et la génération de la clé CPI consiste à hacher un xri sous la forme xri://b associée au fournisseur de contenu.

4. Procédé au niveau d'un noeud de stockage dans un réseau superposé à table de hachage distribuée (DHT) dans un système de réseaux DHT, le procédé consistant à :
recevoir (38), au niveau du noeud de stockage dans le réseau superposé DHT, en provenance d'un demandeur, une demande relative à un élément de contenu ;
générer une clé de contenu utilisée pour identifier un emplacement de stockage de l'élément de contenu en hachant un identifiant de ressource extensible (xri) de l'élément de contenu ;
exécuter une méthode GET sur la clé de contenu ;
si l'élément de contenu est disponible au niveau du noeud de stockage, récupérer (44) la clé de contenu pour l'élément de contenu et envoyer la clé de contenu au demandeur ;
si l'élément de contenu n'est pas disponible au niveau du noeud de stockage, générer une clé d'identifiant de fournisseur de contenu (CPI) associée au fournisseur de contenu particulier en hachant une chaîne de fournisseur de contenu dans le xri, la clé CPI indiquant, dans le système de réseaux DHT, un sous-ensemble de réseaux DHT au niveau duquel l'élément de contenu fourni par le fournisseur de contenu particulier pourrait être stocké ;
exécuter (46) une méthode GET sur la clé CPI pour obtenir des identifications du sous-ensemble de réseaux DHT ; et
transférer (48) une méthode GET de la clé de contenu à des noeuds associés aux identifications du sous-ensemble de réseaux DHT.

5. Procédé selon la revendication 4, consistant en outre à :
récupérer, dans au moins un noeud de stockage dans le sous-ensemble de réseaux DHT, un descripteur d'emplacement de contenu respectif indiquant une ressource respective à partir de laquelle télécharger le contenu ; et
renvoyer le ou les descripteurs d'emplacement de contenu au demandeur.

6. Procédé selon la revendication 4, le procédé consistant en outre, si la méthode GET échoue, à générer un message broadcast GET pour tous les autres noeuds homologues afin de trouver la clé de contenu.

7. Procédé selon la revendication 5, dans lequel, après la récupération du contenu, le noeud de stockage publie localement la description d'emplacement de contenu pour l'élément de contenu qui s'indique lui-même en tant que ressource, de manière à permettre à d'autres demandes du même demandeur de trouver localement le contenu.

8. Appareil comprenant un processeur configuré pour réaliser toutes les étapes d'un procédé selon l'une quelconque des revendications précédentes.

9. Support lisible par ordinateur comprenant des instructions exécutables qui, lorsqu'elles sont exécutées par un processeur, amènent le processeur à réaliser toutes les étapes d'un procédé selon l'une quelconque des revendications 1 à 7.
